Europäisches Patentamt

European Patent Office

Office européen des brevets

(11) Veröffentlichungsnummer: **0 272 523 B1**

# (12) EUROPÄISCHE PATENTSCHRIFT

(45) Veröffentlichungstag der Patentschrift: **11.11.92**

(21) Anmeldenummer: **87118038.6**

(22) Anmeldetag: **05.12.87**

�milaInt. Cl.⁵: **B23B 31/02**

(54) **Werkzeugkupplung.**

(30) Priorität: **10.12.86 DE 3642132**

(43) Veröffentlichungstag der Anmeldung:
**29.06.88 Patentblatt 88/26**

(45) Bekanntmachung des Hinweises auf die
Patenterteilung:
**11.11.92 Patentblatt 92/46**

(84) Benannte Vertragsstaaten:
**CH FR GB IT LI SE**

(56) Entgegenhaltungen:
**EP-A- 0 106 087**
**EP-A- 0 123 156**
**DE-A- 3 410 563**
**DE-A- 3 532 891**

(73) Patentinhaber: **Fried. Krupp Gesellschaft mit
beschränkter Haftung
Altendorfer Strasse 103
W-4300 Essen 1(DE)**

(72) Erfinder: **von Haas, Rainer, Dipl.-Ing.
Krümmelstrasse 26
W-2054 Geesthacht(DE)**

(74) Vertreter: **Vomberg, Friedhelm, Dipl.-Phys.
Schulstrasse 8
W-5650 Solingen 1(DE)**

**Beschreibung**

Die Erfindung betrifft eine Werkzeugkupplung nach dem Oberbegriff des Patentanspruches 1.

Eine solche Kupplung ist prinzipiell aus der EP 0 123 156 A3 bekannt. Dort wird ein mehrteiliges Spannsystem beschrieben, das mit einem gegebenenfalls einen Spannschaft tragenden Aufnahmekörper versehen ist, der an einer Stirnseite eine etwa rechtwinklig zur Drehachse verlaufende Anlagefläche und eine koaxiale kegelige Aufnahmebohrung aufweist, sowie mit einem vorzugsweise als Werkzeugträger ausgebildeten Anschluß versehen ist, das auf einer Stirnseite ebenfalls mit einer rechtwinklig zu der Drehachse verlaufenden Anlagefläche und mit einem koaxialen, in die kegelige Aufnahmebohrung passenden kegeligen Zentrierzapfen ausgebildet ist. Der Innenkegel der Aufnahmebohrung weist jedoch einen um einen Winkelwert größeren Kegelwinkel als der Außenkegel des Zentrierzapfens auf, derart, daß beim Einfügen des Zentrierzapfens in die Aufnahmebohrung der Außenkegel zunächst im Bereich seines kleinsten Durchmessers mit dem Innenkegel in Berührung kommt und daß durch entsprechende Ausbildung des Zentrierzapfens und/oder des Aufnahmekörpers bei dem bis zur gegenseitigen Anlage der beiden Anlageflächen erfolgenden axialen Verspannen des Anschlußteiles mit dem Aufnahmekörper wenigstens einer der beiden Kegel bis zur großflächigen Anlage der beiden Kegel einander elastisch verformbar ist. Nachteiligerweise ergeben sich selbst bei großflächiger Anlage der genannten Kegel sehr unterschiedliche Vorspannungen im vorderen und hinteren Kegelbereich, so daß bei Auftretenden Querkräften die Biegesteifigkeit des genannten mehrteiligen Spannsystems vor allem vom Spiel bzw. von der Vorspannung im großen Bereich des Kegels, nämlich dem Bereich, der der Planfläche am nächsten liegt, abhängig ist.

Kupplungen mit gleichem Kegelwinkel werden z.B. in der nachveröffentlichten DE 35 32 891 beschrieben und insbesondere bei spanabhebenden Werkzeugen benötigt, die automatisch spannbar und handhabbar sind. Insbesondere besitzt der in der vorgenannten Druckschrift beschriebene Gegenstand an seinem bolzenähnlichen Einspannende eine Planfläche mit anschließendem Kurzkegel, einen zylindrischen Teil und am hinteren Ende einen Stützteil, der zylindrisch oder als Kurzkegel ausgebildet sein kann. Dieser Spannteil des Werkzeugschaftes, der auch als Aufnahmezapfen bezeichnet wird, wird in eine entsprechende Bohrung eines Werkzeughalters eingeführt. Der Werkzeughalter weist ebenso eine Planfläche auf, weiter eine anschließende Ausbohrung, die im vorderen Teil kurzkegelig ausgeführt ist und schließlich einen zylindrischen Teil sowie ein führendes Paßteil aufweist. Bei Einführen des Werkzeugschaftes in die Ausnehmung des Werkzeughalters wird eine mögliche Axialbewegung dadurch begrenzt, daß die vorderen Kurzkegel zur Anlage kommen. Zwischen den Planflächen besteht zunächst ein Spalt. Erst durch Aufbringen von entsprechenden Axialkräften wird eine elastische Verformung im Kurzkegelbereich erzeugt, bis die Planflächen vom Werkzeughalter und Werkzeugschaft zur Anlage gelangen und damit eine axiale Fixierung zwischen dem Werkzeugschaft und dem Werkzeughalter erreicht wird.

Die so erzielte Vorspannung im vorderen Kurzkegelbereich hat dabei eine Größe, daß bei Querkräften, wie sie beim Fräsen oder Drehen auftreten, im unbelasteten Bereich keine vollständige Reduzierung der Vorspannung bis zu Null bzw. keine Entlastung auftritt.

Der hintere, zylindrisch ausgeführte Paßteil weist naturgemäß eine leichte Spielpassung auf. Bei kegelig ausgeführtem hinteren Paßteil kann eine leichte radiale Vorspannung gewählt werden, so daß dieser Paßteil zur Abstützung von großen Querkräften dient, die an den Werkzeugschneiden auftreten.

Ferner ist aus der EP 01 06 087 ein Kombinationswerkzeug bekannt, das sich durch eine durchgehend kegelige Ausführung des Spannteils auszeichnet. Diese aus fertigungstechnischer Sicht vorteilhafte Konstruktion ergibt bei vollen Traganteil des Kegels von vorn bis hinten und bei gleicher axialer Spannkraft eine wesentlich verringerte Vorspannung und somit kleinere Flächenpressung. Dies wirkt sich beim Auftreten von großen Querkräften an den Werkzeugschneiden in dem entlasteten Bereich des Kegels so aus, daß die Vorspannung zu Null wird und ein hämmernder Effekt entsteht, da jeder Zerspanungsprozeß einen dynamischen bzw. schwingenden Anteil von nennenswerter Größe aufweist.

Es ist daher Aufgabe der Erfindung, eine fertigungstechnisch vorteilhafte Konstruktion der eingangs genannten Art anzugeben, welche eine Vorspannung bzw. große Flächenpressung zwischen dem Aufnahmezapfen und dem Werkzeughalter auch im Belastungszustand mit Querkräften gestattet, ohne daß die Vorspannung zu stark absinkt.

Diese Aufgabe wird durch die im Anspruch 1 aufgeführten Merkmale gelöst. Durch diese Bohrung läßt sich der verbleibende Querschnitt durch Radialkräfte wie ein Rohr leicht verformen, da der Durchmesser des Spannzapfens des Werkzeugschaftes verkleinert werden kann. Trotzdem weist der Aufnahmezapfen eine hohe Biegesteifigkeit auf. Hierdurch entsteht bei gegebener Axialkraft und durchgehendem kegelig ausgeführten Spannteil im vorderen Kegelteil die gewünschte hohe Flächenpressung und im hinteren Kegelbereich naturgemäß eine geringere.

Nach einer Weiterbildung der Erfindung kann die Sackbohrung entweder zylindrisch, stufenförmig mit in Richtung des kleinsten Durchmessers des Aufnahmezapfens größer werdendem Bohrungsdurchmesser oder kegelstumpfförmig ausgebildet sein. Selbstverständlich bieten sich auch Mischformen der Ausbildung zwischen stufenförmig und kegelstumpfförmig an.

Insbesondere hat sich herausgestellt, daß die erfindungsgemäße Aufgabe dann optimal gelöst werden kann, wenn die Tiefe der Sackbohrung so groß ist, daß sie 1/2 bis 7/8 der Länge des Aufnahmezapfens des Werkzeugkopfes ausmacht. Hält man die angegebenen Maße ein, so kann man die Bohrung bei Ausführung als Stufenbohrung oder Kegelbohrung so gestalten, daß die durch Vorspannung entstehende Flächenpressung im Kegelteil vorherbestimmt ist und eine Größe annimmt, daß in keinem Bereich bei den vorliegenden Radialkräften an den Werkzeugschneiden eine Entlastung zu Null im unbelasteten Kegelbereich auftritt.

Ausführungsbeispiele der Erfindung sind in den Zeichnungen dargestellt. Es zeigen

Fig. 1 einen Querschnitt durch eine Werkzeugkupplung, bei der der Aufnahmezapfen eine zentrale zylindrische Bohrung besitzt,

Fig. 2 ein entsprechender Querschnitt mit stufenförmiger Sackbohrung,

Fig. 3 ein entsprechender Querschnitt mit kegelförmiger Sackbohrung und

Fig. 4 ein entsprechender Querschnitt mit zylinderförmiger Sackbohrung und radialer Querbohrung.

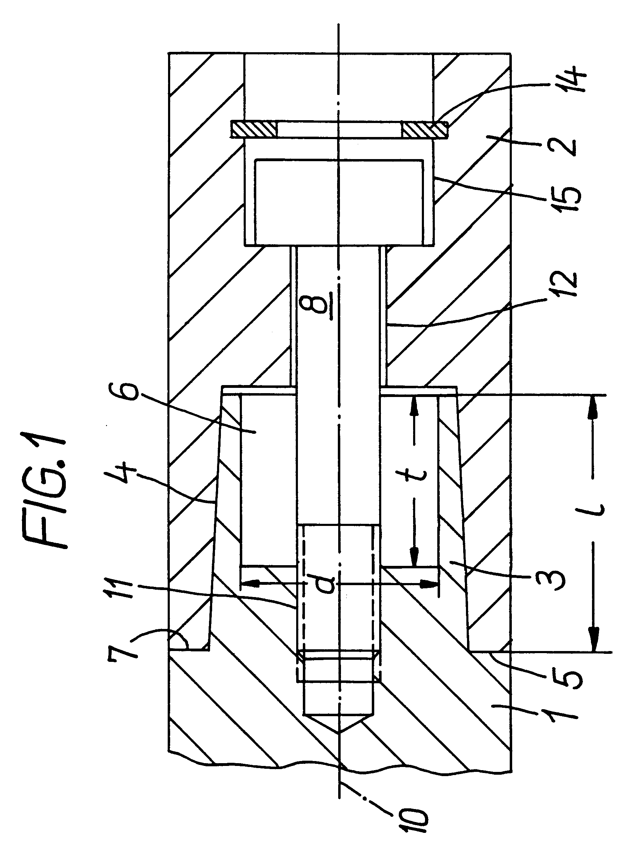

Die in Fig. 1 dargestellte Werkzeugkupplung besteht im wesentlichen aus einen Werkzeugkopf 1 mit einem kegeligen Aufnahmezapfen 3, der an größten Durchmesser einen ringförmigen Anlagebund 5 aufweist. Der Übersicht halber sind die normalerweise zur Indexierung des Werkzeugkopfes vorgesehenen Mitnehmer und die entsprechenden Nuten des Werkzeughalters sowie eventuell umlaufende V-förmige Rillen, für Greifeinrichtungen im Werkzeugkopf weggelassen.

Zur Aufnahme des Aufnahmezapfens 3 dient eine entsprechend geformte kegelige Aufnahmebohrung 4 des Werkzeughalters 2, die ggf. auch in einer auswechselbaren Aufnahmehülse des Werkzeughalters 2 eingebracht sein kann.

Die Aufnahmebohrung 4 besitzt eine ringförmige Anlagefläche 7, die mit dem ringförmigen Anlagebund 5 im gespannten Zustand zur Anlage kommt. Die Elastizität des Aufnahmezapfens wird durch eine koaxial zur Längsmittelachse 10 des Werkzeugkopfes 1 im Aufnahmezapfen vorgesehene Sackbohrung 6 gewährleistet. Die Sackbohrung 6 ist im vorliegenden Fall zylindrisch ausgeführt und besitzt eine Tiefe t, die etwa 2/3 so groß ist wie die gesamte Länge l des Aufnahmezapfens 3.

Zur Verspannung des Werkzeugkopfes dient z.B. eine Zylinderschraube 8, die am Ende des Aufnahmezapfens 3 in einer dort vorgesehenen zentralen Gewindebohrung 11 des Aufnahmezapfens sowie in einer Stufenbohrung 12, 15 des Werkzeughalters 2 geführt und abgestützt wird. Wird diese Zylinderschraube 8 festgezogen, so wird der Aufnahmezapfen 3 entsprechend der Gewindesteigung in die Aufnahmebohrung 4 hineingezogen, wobei insbesondere die elastische Verformbarkeit des vorderen Teils des Aufnahmezapfens dazu führt, daß die ringförmige Anlagefläche 5 mit der Anlagefläche 7 zur Anlage kommen. Der so gespannte Kopf mit angezogener Zylinderschraube 8 ist in Fig. 1 dargestellt.

Anstelle der Zylinderschraube ist auch eine Differential- oder Summenschraube möglich.

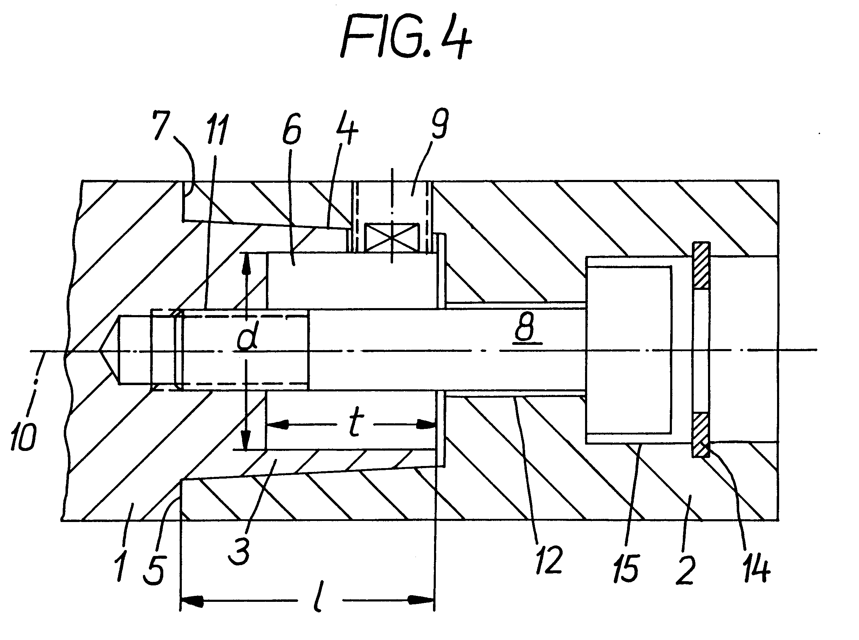

Durch die in Fig. 4 dargestellte radiale Querbohrung 9 können in Verbindung mit weiteren nicht dargestellten Querbohrungen die nötigen axialen Spannbewegungen ausgeführt werden, so daß auf die Zylinderschraube 8 verzichtet werden kann.

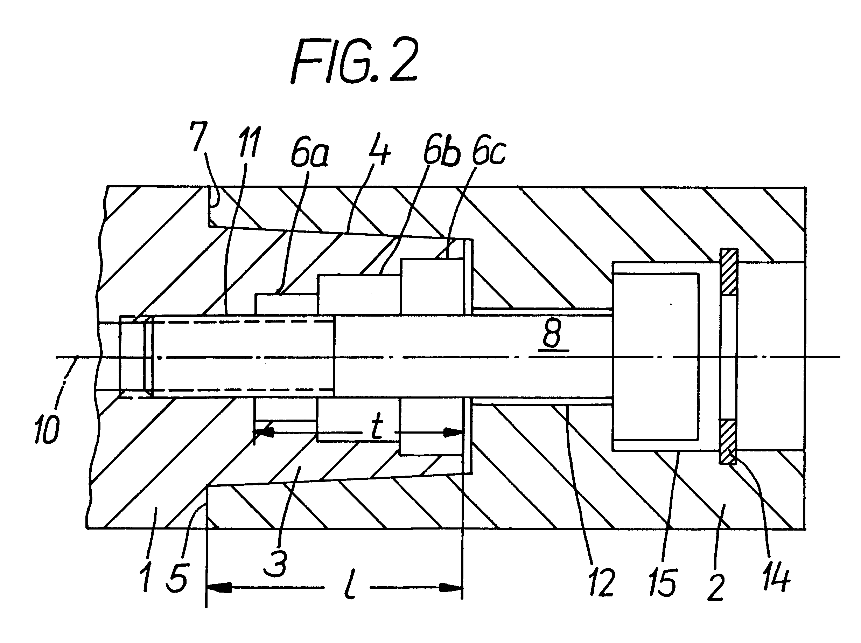

In entsprechender Kupplung zeigt Fig. 2 ein weiteres Ausführungsbeispiel des Erfindungsgegenstandes, der sich vom vorhergehend beschriebenen nur dadurch unterscheidet, daß die zentrale Sackbohrung 6 aus Stufen 6a, 6b und 6c besteht.

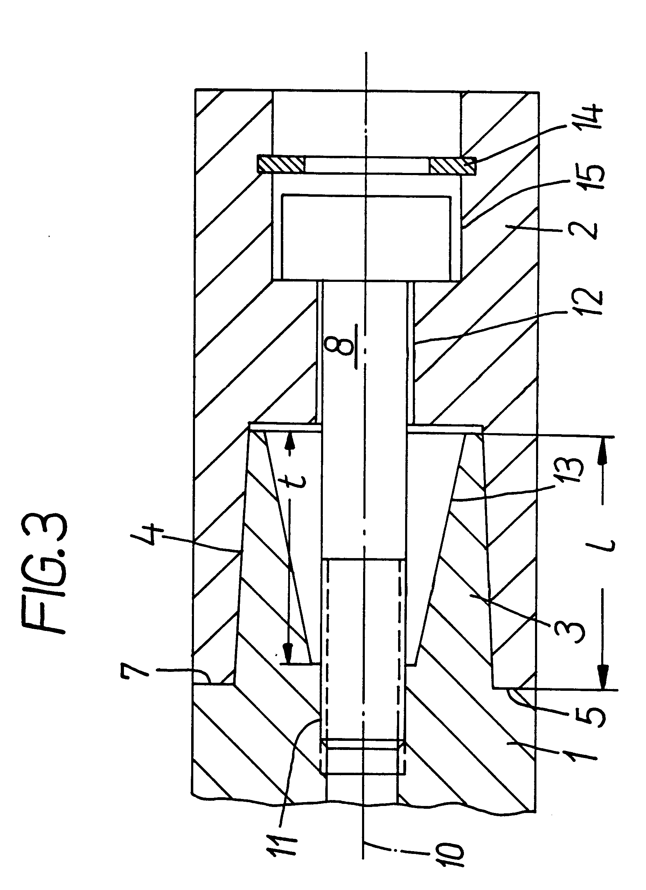

Eine weitere Ausführungsform wird in Fig. 3 beschrieben, die eine kegelige Sackbohrung 13 darstellt.

Die Ausführungsform gemäß Fig. 4 entspricht wiederum der gemäß Fig. 1 mit zylinderförmiger Sackbohrung 6, bei der zusätzlich eine radiale Querbohrung 9 zur Aufnahme von Spannteilen vorgesehen ist. Es können auch mehrere radiale Querbohrungen vorgesehen werden.

Um die Kupplung aus der in den Fig. 1 bis 4 dargestellten Verspannung zu lösen, wird die Zylinderschraube 8 aus der Gewindebohrung des Aufnahmezapfens 3 herausgedreht, bis der Kopf der Zylinderschraube sich an einem Seegering 14 des Werkzeughalters 2 anlegt, bei weiterer Drehung der Schraube wird der Werkzeugkopf 1 mit dem Aufnahmezapfen 3 aus der Aufnahmebohrung 4 des Werkzeughalters 2 herausbewegt. Sodann wird der Werkzeugkopf 1 mittels einer Greifeinrichtung aus dem Werkzeughalter herausgenommen.

Das Einsetzen des Werkzeugkopfes 1 vollzieht sich in umgekehrter Reihenfolge, d.h. der Aufnahmezapfen wird in die Aufnahmebohrung 4 eingeführt, anschließend die Zylinderschraube 8 so weit angezogen, bis die ringförmige Anlage 5 an der Anlage 7 anliegt. Da der Aufnahmezapfen 3 in seinem vorderen Bereich, d.h. im Bereich der Bohrung 6, ein geringes Übermaß gegenüber der Aufnahmebohrung im entsprechend zugeordneten Teil aufweist, ergibt sich bei Einführen des Aufnahmezapfens in die Aufnahmebohrun 4 bis zu der Stelle, wo der ringförmige Anlagebund 5 und die Anlage 7 zur Anlage kommen, eine gewisse Vorspannung, die auch bei seitlichen Krafteinwirkungen auf den Werkzeugkopf, etwa beim Drehen oder Fräsen nicht merklich reduziert wird. Damit wird ein Schlagen des Werkzeuges in der Aufnahmebohrung verhindert.

**Patentansprüche**

1. Werkzeugkupplung zur Verbindung eines Werkzeugkopfes (1) und eines Werkzeughalters (2) mit Verdrehsicherung und axialer Vorspannung, bei der der als Werkzeug dienende Werkzeugkopf einen kegelig ausgelegten Aufnahmezapfen (3), eine Gewindebohrung (11) und einen ringförmigen Anlagebund (7) und der Werkzeughalter eine kegelige hülsenförmige Aufnahmebohrung (4) und eine Anzugsschraube (8) sowie eine ringförmige Anlagefläche (5) aufweisen, wobei der kegelige Aufnahmezapfen des Werkzeugschaftes (2) eine stirnseitige, konzentrisch zur Längsmittelachse (10) verlaufende Sackbohrung (6) aufweist,
**dadurch gekennzeichnet,**
daß der Bohrungsdurchmesser (d) der Sackbohrung (6) stirnseitig 70 bis 97 % des kleinsten Durchmessers des Aufnahmezapfens (3) beträgt und daß der Aufnahmezapfen (3) im Bereich der Sackbohrung (6) bezogen auf die Endlage ein geringes Übermaß gegenüber der Aufnahmebohrung (4) im entsprechend zugeordneten Teil aufweist, wobei die Kegelwinkel der Aufnahmebohrung (4) und des Aufnahmezapfens (3) einander entsprechen, daß die Sackbohrung (6) eine Tiefe (t) von mindestens der Hälfte der Länge (1) des Aufnahmezapfens (3) aufweist und daß im gesamten Kegelteil des Aufnahmezapfens (3) eine Vorspannung besteht.

2. Werkzeugkupplung nach Anspruch 1, gekennzeichnet durch eine zylindrische Sackbohrung (6).

3. Werkzeugkupplung nach Anspruch 1, dadurch gekennzeichnet, daß die Sackbohrung (6) eine Stufenbohrung mit dem größten Bohrungsdurchmesser am kleinsten Durchmesser des Aufnahmezapfens ist.

4. Werkzeugkupplung nach Anspruch 3, dadurch gekennzeichnet, daß die Stufen (6a bis 6c) jeweils aus zylindrischen Teilen und/oder kegelstumpfförmigen Teilen bestehen.

5. Werkzeugkupplung nach Anspruch 1, dadurch gekennzeichnet, daß die Sackbohrung (6) kegelig verläuft.

6. Werkzeugkupplung nach einem der Ansprüche 1 bis 5, dadurch gekennzeichnet, daß die Sackbohrung (6) eine Tiefe (t) von 1/2 bis 7/8 der Länge (1) des Aufnahmezapfens (3) des Werkzeugschaftes (1) besitzt.

7. Werkzeugkupplung nach einem der Ansprüche 1 bis 6, dadurch gekennzeichnet, daß in Höhe der Sackbohrung (6) eine oder mehrere radiale Querbohrungen zur Aufnahme von Spannteilen oder Längsnuten zur Übertragung von Drehmomenten vorgesehen ist bzw. sind.

**Claims**

1. A tool coupling for connecting a tool head (1) and a tool holder (2) with security against twisting and with axial prestressing, wherein the tool head acting as a tool has a conically designed receiving pin (3). a screwthreaded bore (11) and an annular locating collar (7) and the tool holder has a conical sleeve-shaped receiving bore (4) and a retaining screw (8) and an annular locating surface (5), the end face of the conical receiving pin of the tool shank (2) being formed with a blind bore (6) extending concentrically of the longitudinal central axis (10),
characterized in that the diameter (d) of the blind bore (6) amounts on the end face side to 70 to 97% of the minimum diameter of the receiving pin (3) and the receiving pin (3) has in the zone of the blind bore (6) a slight overdimension, referred to the end position, in relation to the receiving bore (4) in the correspondingly associated part, the conical angles of the receiving bore (4) and the receiving pin (3) corresponding to one another, the blind bore (6) has a depth (t) of at least half the length (1) of the receiving pin (3), and there is a prestressing in the whole conical part of the receiving pin (3).

2. A tool coupling according to claim 1, characterized by a cylindrical blind bore (6).

3. A tool coupling according to claim 1, characterized in that the blind bore (6) is a stepped bore having its maximum diameter at the minimum diameter of the receiving pin.

4. A tool coupling according to claim 3, characterized in that the steps (6a to 6c) each consist of cylindrical portions and/or frostoconical portions.

5. A tool coupling according to claim 1, characterized in that the blind bore (6) extends conically.

6. A tool coupling according to one of claims 1 to 5, characterized in that the blind bore (6) has a depth (t) of 1/2 to 7/8 of the length (1) of the receiving pin (3) of the tool shank (1).

7. A tool coupling according to one of claims 1 to 6, characterized in that provided at the level of the blind bore (6) are one or more radial transverse bores are provided for receiving clamping members or longitudinal grooves for transmitting torques.

**Revendications**

1. Accouplement d'outil, pour relier une tête d'outil (1) et un porte-outil (2), comportant une sécurité anti-rotation et une mise en serrage axiale, pour lequel la tête d'outil servant d'outil présente une queue d'emmanchement (3) réalisée conique, un alésage fileté (11) et une butée d'appui (7) annulaire, et le porte-outil présente un alésage de réception (4) conique en forme de douille et une vis d'extraction (8) ainsi qu'une surface d'appui annulaire (5), la queue d'emmanchement conique de la tige d'outil (2) présentant, sur son côté frontal, un alésage borgne (6) concentrique à l'axe longitudinal médian (10),

   caractérisé en ce que

   le diamètre d'alésage (d) de l'alésage borgne (6) représente, côté frontal, 70 à 97 % du plus petit diamètre de la queue d'emmanchement (3) et en ce que la queue d'emmanchement (3), dans la zone de l'alésage borgne (6), tirée en position finale, présente un léger surdimensionnement par rapport à l'alésage de réception (4) dans la partie correspondante, les angles des cônes de l'alésage de réception (4) et de la queue d'emmanchement (3) se correspondant l'un à l'autre, en ce que l'alésage borgne (6) présente une profondeur (t) d'au moins la moitié de la longueur (L) de la queue d'emmanchement (3) et en ce qu'il y a un préserrage sur toute la partie conique de la queue d'emmanchement (3).

2. Accouplement d'outil suivant la revendication 1, caractérisé par un alésage borgne (6) cylindrique.

3. Accouplement d'outil suivant la revendication 1, caractérisé en ce que l'alésage borgne (6) est un alésage étagé comportant le plus grand diamètre au droit du plus petit diamètre de la queue d'emmanchement

4. Accouplement d'outil suivant la revendication 3, caractérisé en ce que les étages (6a à 6c) sont constitués de parties cylindriques et/ou de parties tronconiques.

5. Accouplement d'outil suivant la revendication 1, caractérisé en ce que l'alésage borgne (6) a un tracé conique.

6. Accouplement d'outil suivant l'une quelconque des revendications 1 à 5, caractérisé en ce que l'alésage borgne (6) possède une profondeur (t) de 1/2 à 7/8 de la longueur (L) de la queue d'emmanchement (3) de la tige d'outil (1).

7. Accouplement d'outil suivant l'une quelconque des revendications 1 à 6, caractérisé en ce que, sur la hauteur de l'alésage borgne (6), il est prévu un ou plusieurs alésages transversaux radiaux pour recevoir des organes de serrage, ou des rainures longitudinales pour reprendre des couples de rotation.

# FIG.1

EP 0 272 523 B1

FIG.2

FIG.3

FIG.4